# EUROPEAN PATENT SPECIFICATION

(11) **EP 2 784 869 B1**
(45) Date of publication and mention of the grant of the patent: **05.10.2016**
(21) Application number: 12851624.2
(22) Date of filing: 10.11.2012
(51) Int. Cl.: H01M 2/10, H01M 10/613, H01M 10/6554

(54) **BATTERY PACK**
BATTERIEPACK
BLOC-BATTERIE

(30) Priority: 21.11.2011 JP 2011253380
(43) Date of publication of application: 01.10.2014
(73) Proprietor: Yamaha Hatsudoki Kabushiki Kaisha, Iwata-shi, Shizuoka 438-8501 (JP)
(72) Inventor: FUKUKAWA, Kouichi, Moriguchi-shi Osaka 570-8677 (JP); ITAGAKI, Takahiro, Iwata-shi Shizuoka 438-8501 (JP); TERADA, Junji, Iwata-shi Shizuoka 438-8501 (JP)
(74) Representative: v. Bezold & Partner Patentanwälte - PartG mbB
(86) International application number: PCT/JP2012/079195
(87) International publication number: WO 2013/077205

(56) References cited:
- WO-A1-2012/133709
- JP-A- 2002 124 224
- JP-A- 2002 334 684
- JP-A- 2007 035 393
- JP-A- 2007 200 580
- JP-A- 2009 123 371
- JP-A- 2009 123 371
- JP-A- 2010 146 774
- US-A1- 2005 202 310
- US-A1- 2010 209 760
- US-A1- 2010 310 919

## Description

### BACKGROUND OF THE INVENTION

### 1. Field of the Invention

The present invention relates to a battery pack housing a plurality of rechargeable batteries, and for example, relates to a battery pack that can be used as a power source for an electric assist bicycle or electric motor scooter.

### 2. Description of the Related Art

Battery packs with many rechargeable batteries connected in series and/or parallel are used, for example, as the power source in electric assist bicycles and electric motor scooters, and as the power source apparatus in electric vehicles. A battery pack has rechargeable batteries held in a (plastic) resin battery holder, which is in turn housed in an insulated outer case.

In this type of battery pack, the number of series-connected battery cells can be increased to increase the output voltage, and the number of parallel-connected battery cells can be increased to increase the battery capacity. In particular, given the increasing demand for higher power output in recent years, the trend is to increase the number of battery cells used in a battery pack. Unfortunately, each battery cell generates heat due to charging and discharging with high currents. Therefore, efficient battery pack cooling is necessary for long-term stable battery cell operation.

With this in mind, the idea of making the outer case of metal is considered for improving heat dissipation by radiating heat from all the outer case surfaces. However, a metal outer case not only has superior thermal conductivity, but also has superior electrical conductivity. For this reason, electrical insulation (isolation) of the battery cells housed inside is not trivial. In addition, to avoid short-circuits resulting from moisture ingress, the outer case needs to be made as a water-tight structure. However, because of shape-formation constraints associated with a metal outer case, establishing a water-tight structure is not simple and is the cause of high production cost. Further, a metal outer case increases battery pack weight as well as raw material cost.

In contrast, a plastic resin outer case is low-cost, light-weight, and a water-tight structure can be implemented with relative simplicity. However, a plastic resin outer case has the drawback of inferior heat-radiating characteristics compared to a metal outer case.

### Citation List

### Patent Literature

Patent Literature 1: Japanese Laid-Open Patent Publication 2002-124224
Patent Literature 2: Japanese Laid-Open Patent Publication 2002-334684
Patent Literature 3: Japanese Laid-Open Patent Publication 2003-36819
Patent Literature 4: Japanese Laid-Open Patent Publication 2005-285456
Patent Literature 5: Japanese Laid-Open Patent Publication 2001-210286
Patent Literature 6: Japanese Laid-Open Patent Publication 2009-123371 A

### Summary

### Technical Problem

The present invention was developed considering these types of prior-art problems. Thus, it is a primary object of the present invention to provide a battery pack that improves heat-radiating characteristics and resolves the drawbacks associated with use of a metal outer case.

### Solution to the Problem and Advantageous Effects of the Invention

To achieve the object cited above, the battery pack of the present invention is provided with a plurality of battery cells 1, a battery holder 2 that retains the plurality of battery cells 1, and a plastic resin outer case 4 that houses the battery holder 2. Metal heat-radiating plates 14 are insertion-molded into the outer case 4; parts of the heat-radiating plates 14 are exposed from inside and outside surfaces of the outer case 4; and the battery holder 2 is thermally coupled with the heat-radiating plates 14 exposed on the inside surfaces of the outer case 4. By putting the battery holder in contact with the outer case in a thermally coupled manner, the externally exposed heat-radiating plates can serve as heat-sinks, heat generated by the battery cells can be efficiently dissipated outside the battery pack through the battery holder, and the battery pack can achieve the positive feature of high reliability operation.

In the battery pack, heat-radiating plate 14 surfaces exposed from the inside surfaces of the outer case 4 can be covered with insulating protection layer 16. This avoids exposure of bare heat-radiating plate from the inside surfaces of the outer case, and can insure electrical isolation and moisture protection to improve safety and reliability.

In the battery pack, hills and valleys (grooves) can be formed in the surfaces of the heat-radiating plates 14 exposed from the outside surfaces of the outer case 4. This allows the surface area of the heat-radiating plates to be increased to improve heat-radiating characteristics.

In the battery pack, surfaces of the heat-radiating plates 14 exposed from inside surfaces of the outer case 4 can be formed as approximately (flat) planar surfaces. This allows the surfaces of the heat-radiating plates that contact the battery holder to make intimate contact and improve thermal coupling and heat-radiation.

In the battery pack of the present invention, exposed surfaces 15 of the heat-radiating plates 14 on inside surfaces of the outer case 4 are recessed by steps established on the inside surfaces of the outer case 4 and the battery holder 2 is provided with protruding pieces 32 that insert into the recessed regions in the outer case 4 inside surfaces to mate with the exposed surfaces 15 of the heat-radiating plates 14. This can improve thermal coupling while maintaining electrical insulation and improve the heat-radiating characteristics.

In the battery, the protruding pieces 32 can additionally serve as retaining pieces that prevent the battery cells 1 from falling out of the battery cell 1 storage spaces 34 in the battery holder 2. This uses existing battery holder components for multiple purposes, and avoids having to provide special-purpose battery holder surfaces to contact the heat-radiating plates. This can improve heat-radiating characteristics without making significant changes in battery holder size and shape and without increasing cost.

In the battery pack, outer case 4 surfaces where heat-radiating plates 14 are exposed can be the upper surface, the bottom surface, or both the upper and bottom surfaces.

### Brief Description of the Drawings

Fig. 1 is an oblique view from above of a battery pack for the first embodiment;
Fig. 2 is a bottom view of the battery pack in Fig. 1;
Fig. 3 is a view of the cross-section through the line III-III across the battery pack in Fig. 2;
Fig. 4 is a view of the cross-section through the line IV-IV along the battery pack in Fig. 2;
Fig. 5 is an exploded oblique view of the outer case;
Fig. 6 is an oblique view showing the battery assembly in Fig. 5;
Fig. 7 is an exploded oblique view of the battery assembly in Fig. 6;
Fig. 8 is an exploded oblique view of the battery assembly in Fig. 6 viewed from below and behind;
Fig. 9A is an exploded cross-section schematic showing connecting surfaces between the outer case and the battery holder, Fig. 9B is a cross-section schematic showing the outer case and battery holder of Fig. 9A in contact;
Fig. 10A is an exploded cross-section schematic showing connecting surfaces between the outer case and the battery holder in a battery pack for the second embodiment, Fig. 10B is a cross-section schematic showing the outer case and battery holder of Fig. 10A in contact;
Fig. 11 is an enlarged oblique view of an important region of the cross-section of Fig. 4; and
Fig. 12 is a further enlarged oblique view of the cross-section of Fig. 11.

The following describes embodiments of the present invention based on the Figures. However, the following embodiments are merely specific examples of battery packs representative of the technology associated with the present invention, and the battery pack of the present invention is not limited to the embodiments described below. Further, components cited in the claims are in no way limited to the components indicated in the embodiments. In the absence of specific annotation, structural component features described in the embodiment such as dimensions, raw material, shape, and relative position are simply for the purpose of explicative example and are in no way intended to limit the scope of the invention. Properties such as the size and spatial relation of components shown in the figures may be exaggerated for the purpose of clear explanation. In the descriptions following, components with the same name and reference sign indicate components that are the same or have the same properties and their detailed description is appropriately abbreviated. Further, a single component can serve multiple functions and a plurality of structural elements of the invention can be implemented with the same component. In contrast, the functions of a single component can be divided among a plurality of components. In addition, explanations used to describe part of one implementation mode or embodiment may be used in other implementation modes or embodiments.

### (First embodiment)

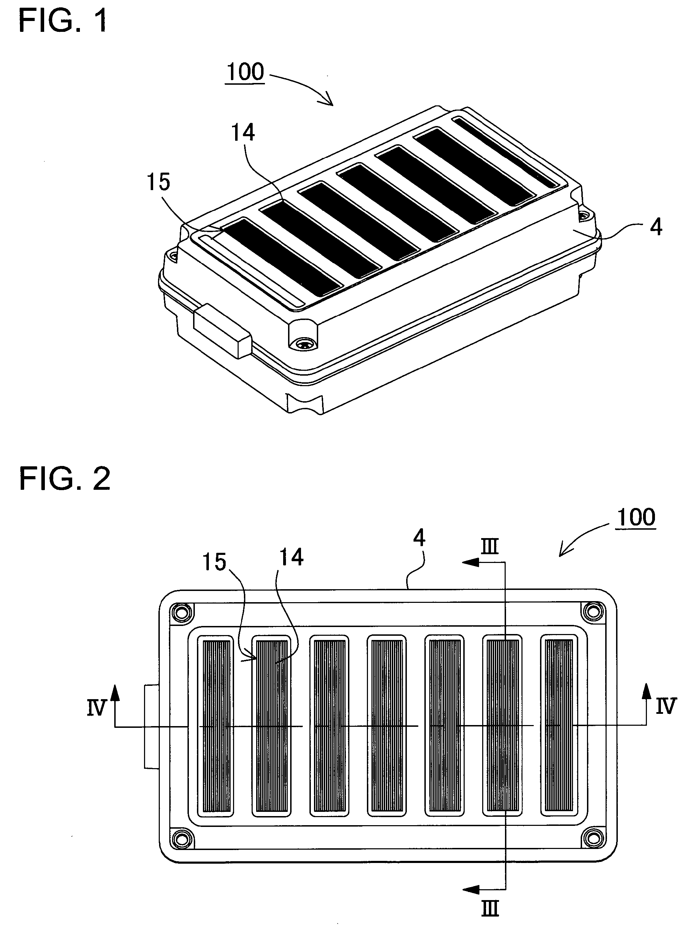

Fig. 1 shows a battery pack 100 for the first embodiment of the present invention. The battery pack 100 shown in this figure is installed in an electric motor-bike to supply driving power. Therefore, an output connector is provided to supply power to the motor-bike. The output connector includes output terminals from high voltage lines connected to the series and/or parallel-connected rechargeable batteries housed in the battery pack 100. Signal terminals for control signal communication between the battery pack 100 and the electric motor-bike are also provided separate from the output terminals. In addition, the output connector can also be provided with charging terminals for charging the internal battery cells 1 from outside the battery pack 100. The charging terminals and the output terminals can be a common set of terminals. The output connector groups the output terminals and/or charging terminals and the signal terminals at one connector. However, there is no requirement to integrate those terminals into a single connector, and separate connectors can also be established for each terminal set.

The battery pack 100 is set in a fixed location in the electric motor-bike connecting the output connector in a socket (receptacle) established in the motor-bike. Here, an example of an application where the battery pack serves as the power source apparatus in an electric motor-bike is described. However, it should be clear that the battery pack of the present invention is not limited to use as an electric motor-bike power source apparatus, and can also be used as a power source apparatus in other applications.

The battery pack 100 shown in Fig. 1 is provided with a plurality of rechargeable battery cells 1, and a battery holder 2 that partitions the interior of the battery pack 100 into a plurality of battery cell 1 storage spaces 34 to hold the individual battery cells 1. In the battery pack 100 of the figures, battery cells 1 are disposed in fixed positions in the battery holder 2 and connected in series and parallel to form a battery assembly, which is housed in the outer case 4.

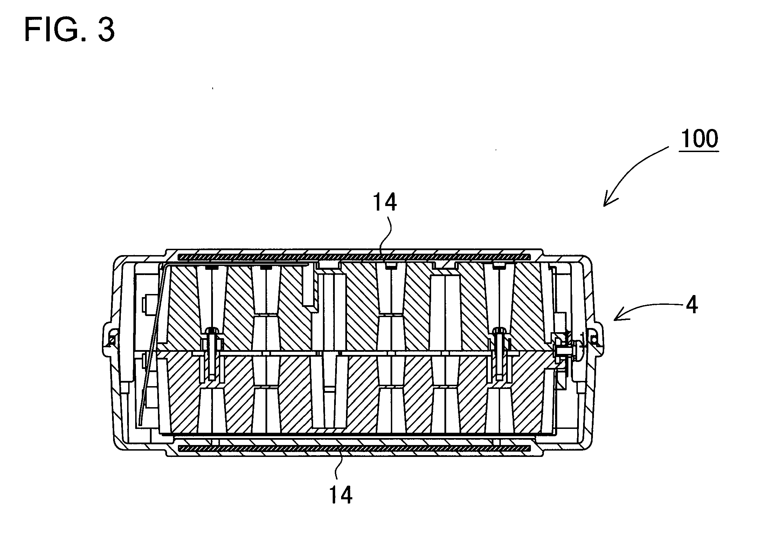

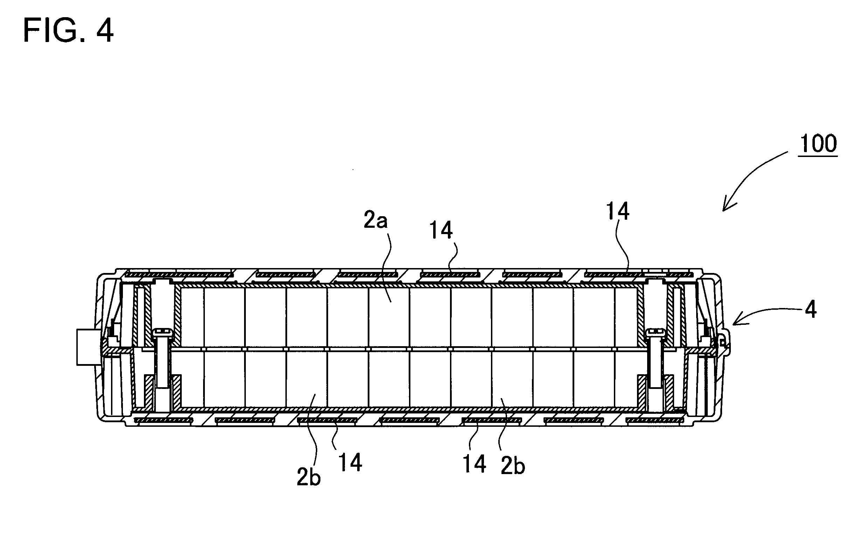

As shown in the bottom view of Fig. 2 and the cross-section views of Figs. 3 and 4, the outer case 4, which establishes the external shape of the battery pack 100, has an overall box-shape. The outer case 4 contains the plurality of battery cells 1.

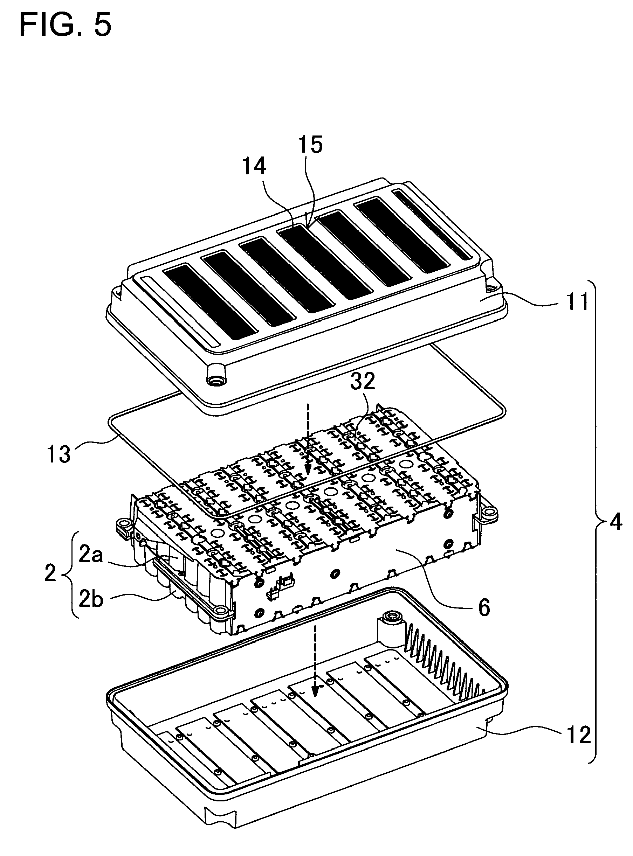

The outer case 4 is divided into a heat-radiating sub-case 11 and a connecting sub-case 12, and the battery holder 2 is held inside those two sub-cases. Fig. 5 shows an exploded oblique view of the outer case 4. The outer case 4 shown in this figure retains the battery holder 2 in the space established inside the heat-radiating sub-case 11 and connecting sub-case 12. The battery cells 1 are retained in the battery holder (described later). Resiliently deformable sealing material 13 such as gasket material is sandwiched between connecting surfaces of the heat-radiating sub-case 11 and connecting sub-case 12 to implement a water-tight seal at that interface.

### (Battery assembly)

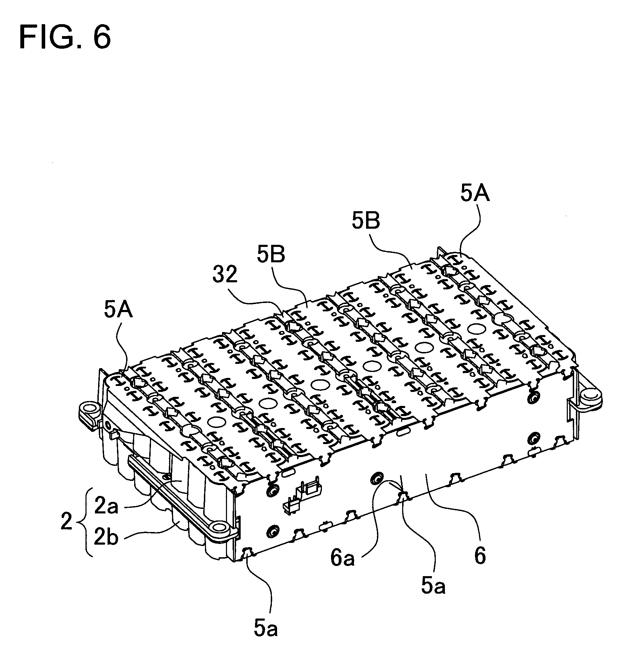

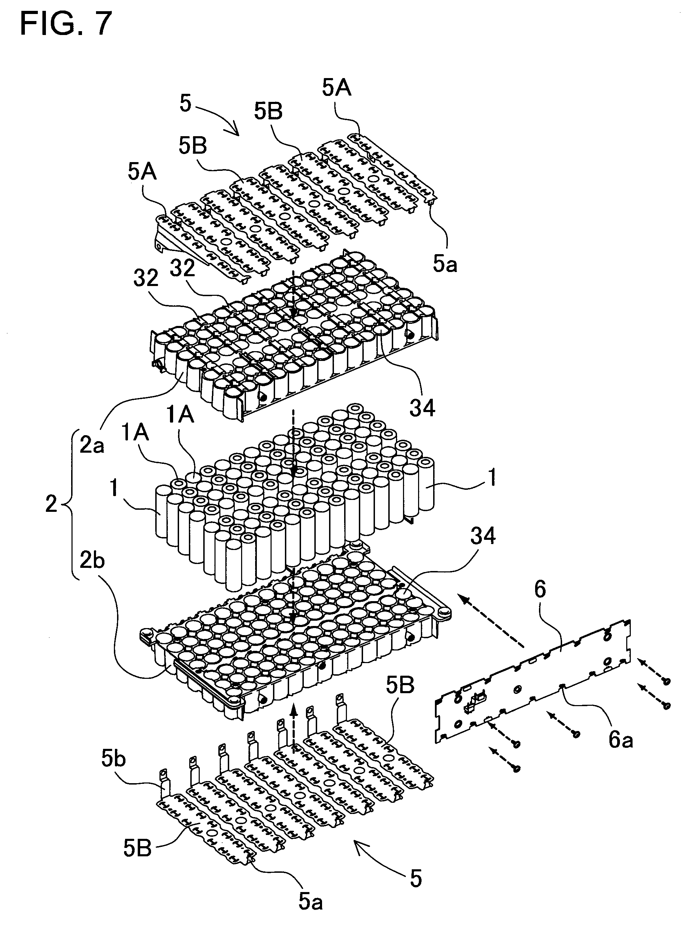

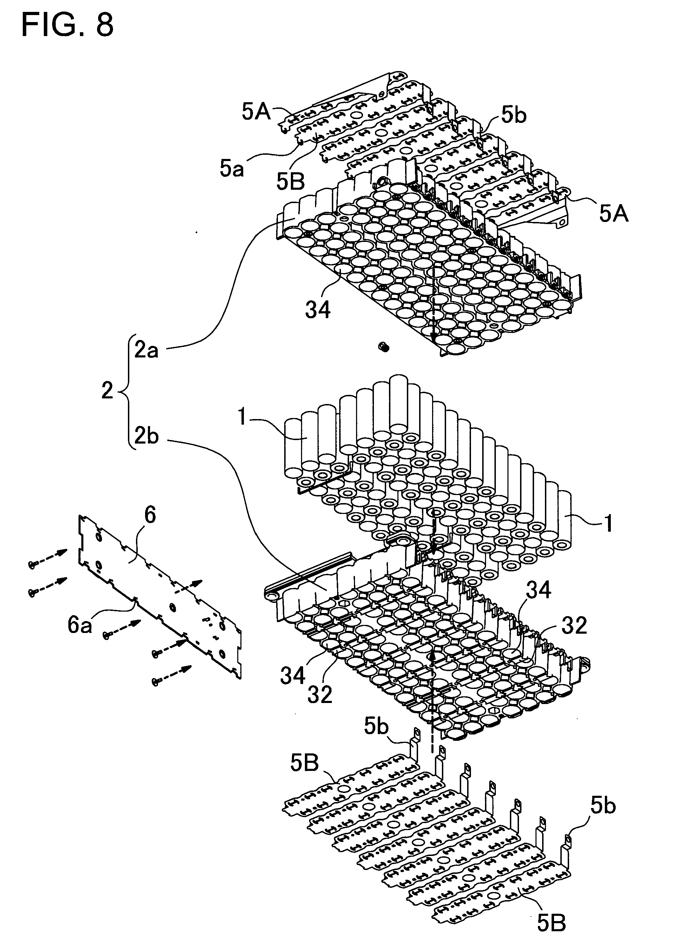

The battery assembly, which is held in the outer case 4 and which includes the battery holder 2, is shown in the oblique view of Fig. 6 and the exploded oblique views of Figs. 7 and 8. The battery assembly shown in these figures is provided with a plurality of rechargeable battery cells 1, a plastic battery holder 2 that holds the battery cells 1 in a multiple row and column array, a plurality of lead-plates 5 weld-attached to electrode terminals 1A at the end-planes of the battery cells 1 held in fixed positions in the battery holder 2 to electrically connect those battery cells 1, and a circuit board 6 fitted to one side of the battery holder 2.

As shown in the exploded oblique views of Figs. 7 and 8, the battery holder 2 has 7 lengthwise rows of battery cells 1 with 14 cells disposed in each row. Namely, 98 battery cells are arranged in a 7 row by 14 column array. However, the battery pack of the present invention is not limited to this number of battery cells or this array configuration. The battery cells arranged in multiple rows and columns are connected in series and parallel to form the battery assembly. The battery assembly (with 98 battery cells) shown in Figs. 7 and 8 has the 7 battery cells in each column connected in parallel and adjacent columns connected in series to connect the 14 columns in series. Namely, the battery assembly of the figures has 14 groups of 7 parallel-connected battery cells connected in series. In this configuration, by connecting a plurality of battery cells in parallel, battery pack output current can be increased, and by connecting the groups of parallel-connected battery cells in series, battery pack output voltage can be increased. However, the battery pack of the present invention does not limit the number of series-connected battery cells and the number parallel-connected battery cells to the configuration described above.

### (Battery cell 1)

The battery cells 1 are batteries that can be charged (rechargeable). The battery pack of the figures has battery cells 1 with a circular cylindrical shape. In the present embodiment, circular cylindrical lithium ion rechargeable batteries are used as the battery cells 1. Lithium ion rechargeable batteries are suitable for use in high-capacity, high-output battery systems. This is because lithium ion rechargeable batteries can increase the battery capacity per unit volume and per unit weight. However, the battery pack of the present invention is not limited to the use of lithium ion rechargeable batteries as the battery cells, and other rechargeable batteries such as lithium polymer batteries, nickel hydride batteries, or nickel cadmium batteries can also be used. In addition, battery cell shapes are not limited to circular cylindrical, and the battery cells can also be rectangular or other non-circular (e.g. polygonal cylindrical) batteries.

### (Battery holder 2)

The battery holder 2 retains a plurality of circular cylindrical battery cells 1 in multiple rows and columns with parallel orientation. As shown in the oblique views of Figs. 7 and 8, the battery holder 2 is provided with multiple rows and columns of circular cylindrical battery cell storage spaces 34 that can hold the battery cells 1. The battery cells 1 are disposed in fixed positions by insertion into each battery cell storage space 34. Openings through the battery holder 2 are established in the battery cell axial direction to form the storage spaces 34 that hold the battery cells 1. The battery holder 2 of the figures is formed with circular cylindrical battery cell storage spaces 34. The battery cell storage spaces 34 are formed with an inside shape that can accommodate insertion of the circular cylindrical battery cells 1. To retain 98 battery cells 1 in a given array, the battery holder 2 of the figures is provided with 98 battery cell storage spaces 34 arranged in a 7 row by 14 column array. Both surfaces of the battery holder 2 (in the battery cell axial direction) are open at the end planes of the battery cell storage spaces 34.

The battery holder 2 is divided into a first sub-holder 2a and a second sub-holder 2b at the midpoint of the lengthwise dimension (in the vertical direction of Figs. 7 and 8) of the circular cylindrical battery cells 1. The first sub-holder 2a and the second sub-holder 2b have openings at both ends of the battery cell storage spaces 34, and are formed with shapes that allow circular cylindrical battery cell 1 insertion. The battery holder 2 is molded from electrically insulating material such as plastic. A plastic battery holder 2 formed in a shape that establishes battery cell storage spaces 34 can accurately position a plurality of battery cells 1 by partitioning the battery cells 1 in the format of an array.

The first sub-holder 2a and the second sub-holder 2b are joined together with battery cells 1 inserted in corresponding battery cell storage spaces 34 to dispose a battery cell 1 in each storage space 34. The first sub-holder 2a and the second sub-holder 2b are connected together via set-screws. In the figures, the first sub-holder 2a has screw-holes (not illustrated) for inserting set-screws and the second sub-holder 2b has screw-bosses in opposing surfaces where the set-screws screw in.

### (Retaining pieces [protruding pieces] 32)

Outer surfaces of the battery holder 2 are provided with retaining pieces 32 formed in single-piece construction. The retaining pieces 32 prevent the ends of the battery cells 1 inserted in the storage spaces 34 from jutting outside the surfaces of the battery holder 2. The retaining pieces 32 are established extending over the edges of the battery cell storage spaces 34 in a manner that partially covers the openings at the ends of the battery cell storage spaces 34. This exposes the electrode terminals 1A of battery cells 1 loaded in the storage spaces 34 from the outer surfaces of the battery holder 2 while preventing the ends of the battery cells 1 from coming out of the storage space 34 openings.

The battery holder 2 in Fig. 6 has an array of battery cell storage spaces 34, and has retaining pieces 32 disposed in straight-lines and in a manner partially overlapping the battery cell storage space 34 openings. The retaining pieces 32 contact the end-planes of the battery cells 1 loaded in the storage spaces 34 and prevent the ends of the battery cells 1 from jutting out from the outer the surfaces of the battery holder 2. The retaining pieces 32 also function as guides to align the lead-plates 5 into fixed positions. Further, the retaining pieces 32 also serve as the protruding pieces 32 that contact the heat-radiating plates 14.

When the first sub-holder 2a and the second sub-holder 2b are connected together, electrode terminals 1A at the ends of the battery cells 1 are exposed from the battery cell storage space 24 openings in the battery holder 2. Lead-plates 5 are weld-attached to the externally exposed electrode terminals 1A by a technique such as spot-welding or laser-welding. The retaining pieces 32 are used as alignment guides for the lead-plates 5, which are disposed in fixed separated positions on both surfaces of the battery holder 2 over the openings of the battery cell storage spaces 34 (as shown in Figs. 7 and 8). The retaining pieces 32 guide the lead-plates 5 into positions where they can connect to the battery cell 1 electrode terminals 1A. Namely, the retaining pieces 32 are established in positions that dispose the lead-plates 5 for connection with the battery cell electrode terminals 1A. From a different viewpoint, since the retaining pieces are not established in positions where the lead-plates are ultimately located, unintended conduction between the lead-plates and the heat-radiating plates can be avoided by contacting the retaining pieces to the heat-radiating plates (in a thermally coupled manner).

### (Lead-plates 5)

As shown in Figs. 7 and 8, the lead-plates 5 are aligned via the battery holder 2 retaining pieces 32, and spot-welded or laser-welded to the battery cell 1 electrode terminals 1A to connect adjacent battery cells 1 in series and parallel. The lead-plates 5 connect battery cells 1 in the same (lateral) column in parallel, and connect battery cells 1 in adjacent columns in series. There are two types of lead-plates 5, which are disposed in locations at both (electrode terminal) ends of the battery cells 1 connected in multiple columns. First lead-plates 5A are one battery cell column wide and connect one column of 7 battery cells 1 in parallel. Second lead-plates 5B are two battery cell columns wide and connect the electrode terminals 1 A of 14 battery cells together to connect each column of 7 battery cells 1 in parallel and connect the two adjacent columns in series.

The battery assembly in Figs. 7 and 8 has 7 second lead-plates 5B, which each connect two columns of battery cells 1 together, arranged in parallel orientation on the outer surface of the second sub-holder 2b (bottom surface in Fig. 7). Each of the 7 second lead-plates 5B connects columns of 7 battery cells 1 in parallel and connects two adjacent columns in series. Further, 6 second lead-plates 5B are disposed in the midsection of the outer surface of the first sub-holder 2a (upper surface in Fig. 7), and 2 first lead-plates 5A, which each connect a single column of battery cells 1 together, are disposed at both ends of the battery assembly establishing the output nodes. The 6 second lead-plates 5B disposed in the midsection of the first sub-holder 2a connect columns of 7 battery cells 1 in parallel and connect two adjacent columns in series. The 2 first lead-plates 5A disposed at both ends of the battery assembly each connect a column of 7 battery cells 1 in parallel. In this battery assembly, 7 battery cells 1 are connected in parallel in each column, and 14 columns are connected in series (viewed from the side, series connection zigzags up-and-down through the battery cells and lead-plates along the lengthwise direction of the battery assembly). The first lead-plates 5A connected at both ends of the battery assembly are connected to output terminals (not illustrated).

The lead-plates 5 are metal plates with low electrical resistance and superior thermal conductivity. For example, nickel sheet-metal or a sheet-metal such as iron, iron alloy (steel), copper, or copper alloy, which is plated with a metal such as nickel, is used for the lead-plates. Metal plates with optimal thickness for weld-attachment, such as 0.1 mm to 0.3mm are used as the lead-plates 5. If lead-plates, which are spot-welded or laser-welded, are too thick or too thin, they cannot be weld-attached to the battery cell terminals in an ideal manner. Consequently, optimal lead-plate thickness is determined considering the application and current flow requirements.

Each lead-plate 5 has a connecting tab 5a established at one end to make connection with the circuit board 6. As shown in Figs. 7 and 8, the ends of the connecting tabs 5a are further bent for direct electrical connection of the ends of the connecting tabs 5a to the circuit board 6. The circuit board 6 has slits 6a opened to accommodate insertion of the ends of the connecting tabs 5a. The ends of the connecting tabs 5a are inserted into the slits 6a and soldered to make connection with the circuit board 6. The circuit board 6 inputs lead-plate 5 voltages and currents via the connecting tabs 5a to detect intermediate potential levels inside the battery assembly.

### (Circuit board 6)

The circuit board 6 carries protection circuitry that protects the battery cells 1 by detecting parameters such as battery cell temperature and voltage. The circuit board 6 is attached to one side of the battery holder 2 and is connected with the connecting tabs 5a of the lead-plates 5, which connect to the battery cells 1. The lead-plate 5 connecting tabs 5a are connected to voltage detection circuitry mounted on the circuit board 6. This allows the circuit board 6 to detect intermediate voltages in the battery assembly. The circuit board 6 carries charging and discharging circuitry to control battery cell 1 charging current and discharging current. The circuit board 6 also carries battery cell 1 protection circuits as well as circuitry, circuit elements, and structural components required to operate the battery pack. Circuit boards such as glass (reinforced) epoxy boards can be used as the circuit board 6.

Additionally, heating elements can be established in contact with the surfaces of the battery cells. In that case, control circuitry is provided on the circuit board to turn the heating elements ON and OFF. The control circuitry detects temperature to control power to the heating elements. The control circuitry is equipped with temperature sensors to detect battery temperature or outside ambient temperature. For example, a temperature sensor can be a thermistor. A thermistor detects surrounding temperature fluctuation by detecting resistance change, which is input to the control circuitry. The battery pack has temperature sensors disposed close to the battery cells to detect battery cell temperature.

(In the case of two battery holders) the battery pack can be configured with a circuit board for each battery holder. Or, a single circuit board can be installed on only one of the battery holders to serve as a common circuit board that oversees two battery holders.

### (Heat-radiating plate 14)

In the example of Fig. 5, the outer case 4 heat-radiating sub-case 11 and connecting sub-case 12 are made of plastic resin. Further, metal heat-radiating plates 14 are insertion molded into those sub-cases. Parts of the heat-radiating plates 14 are exposed from the inside and outside surfaces of the case. Regions of the heat-radiating plates 14 exposed from the inside surfaces of the case are thermally coupled with the battery holder 2. By contacting the battery holder 2 and the outer case in a thermally coupled manner, the externally exposed heat-radiating plates 14 can serve as heat sinks. This allows heat generated by the battery cells to be transferred through the battery holder and efficiently dissipated outside the battery pack, and has the merit of allowing high reliability operation. Metal plate with superior thermal conductivity such as aluminum or copper plate can be used to implement this type of heat-radiating plate 14. In particular, aluminum is light-weight, can be inexpensively formed into heat-radiating plates 14, and therefore, is a favored material.

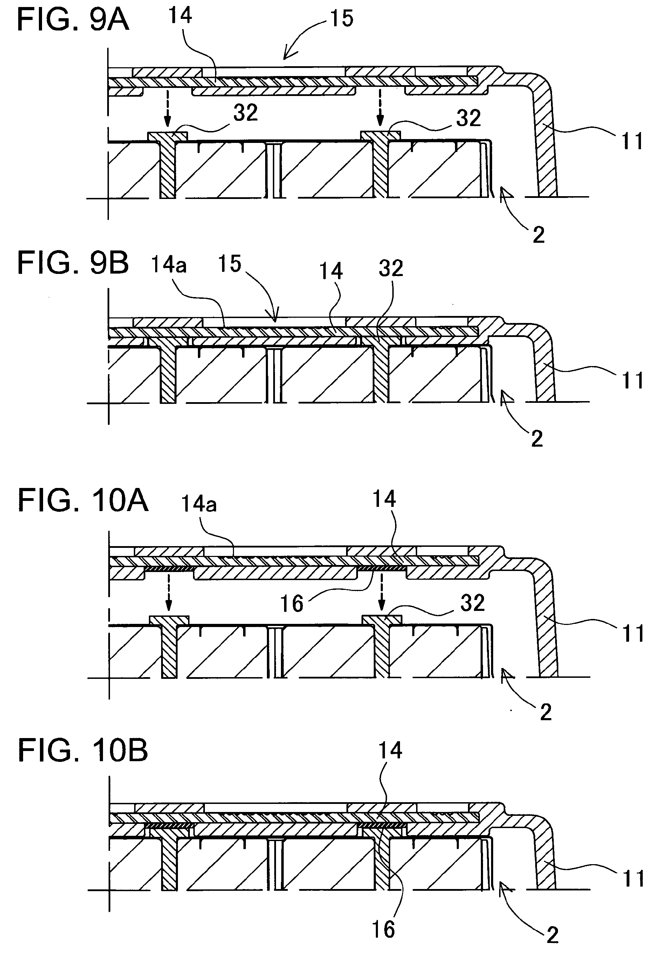

As shown in the enlarged cross-section view of Fig. 9A, the inside surfaces of the outer case 4 heat-radiating sub-case 11 and connecting sub-case 12 are formed with recessed regions established at steps in the surfaces of the case. Exposed surfaces 15 of the heat-radiating plates 14 are disposed in those recessed regions. Correspondingly, the battery holder 2 has protruding pieces 32 that protrude towards the exposed surfaces 15 of the heat-radiating plate. The protruding pieces 32 are plastic resin molded as a single-piece with each sub-holder of the battery holder 2. Since the plastic resin protruding pieces 32 are electrical insulators, there is no electrical conduction even when they are in contact with a heat-radiating plate 14 as shown in Fig. 9B. This maintains electrical isolation of the battery cells from the heat-radiating plates 14. On the other hand, battery cell heat is transferred to the heat-radiating plates 14 through the battery holder 2 protruding pieces 32 and efficiently radiated outside the battery pack from exposed heat-radiating plates on the outside surfaces of the case. The surfaces of the protruding pieces 32 are approximately planar, and surfaces of the heat-radiating plates exposed from inside surfaces of the outer case are also approximately planar.

### (Protection layer 16)

Exposed surfaces 15 of the heat-radiating plates on the inside surfaces of the outer case heat-radiating sub-case 11 and connecting sub-case 12 can be covered with insulating protection layer 16. This configuration is implemented as the second embodiment and shown in the cross-section view of Fig. 10A. Protection layer 16 is adhered onto heat-radiating plate exposed surfaces 15 on the inside surfaces of the case. As shown in Fig. 10B, battery holder 2 protruding pieces 32 are inserted into recessed regions to make contact with exposed surfaces 15 through intervening protection layer 16, and the battery holder 2 and outer case are connected together via fasteners such as set-screws. This improves thermal coupling between the protruding pieces 32 and the heat-radiating plates 14 to improve heat-radiating characteristics. Further, bare surfaces of the heat-radiating plates 14 are not exposed from the inside surfaces of the case to improve safety and reliability due to additional electrical isolation and moisture protection established at interfaces between the protruding pieces and the heat-radiating plates. The protection layer 16 is made with a thickness that is thin enough to maintain good thermal conductivity while still providing sufficient electrical isolation and moisture protection. In the present example, the thickness is on the order of 1 mm.

### (Hills and valleys 14a)

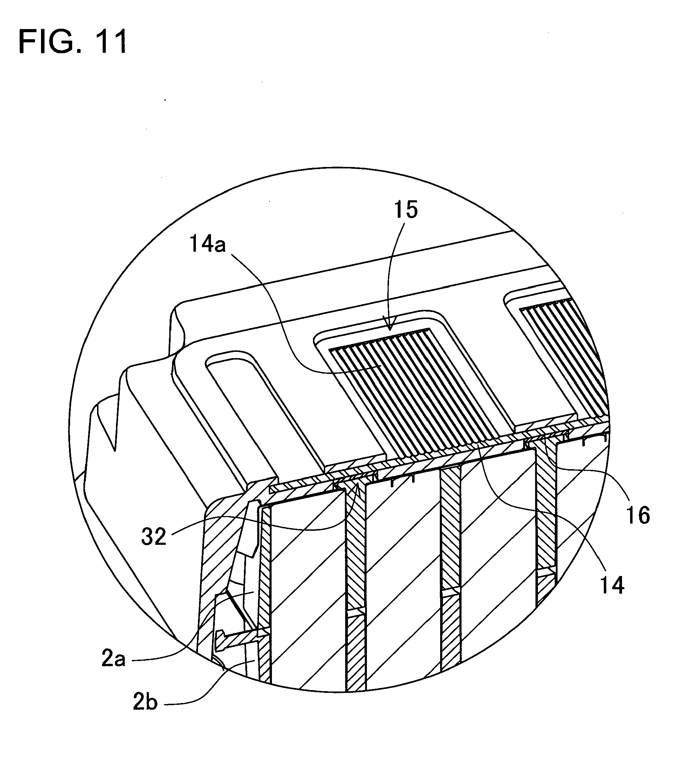

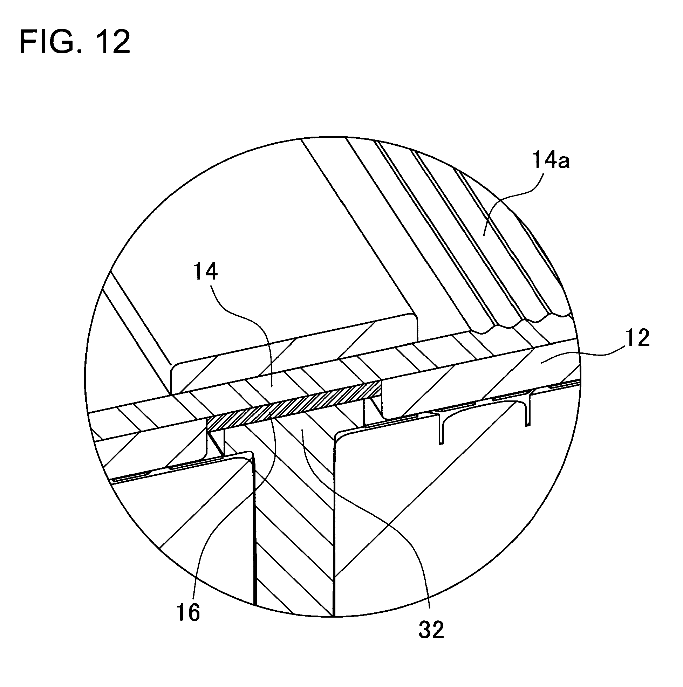

As illustrated in the enlarged region of Fig. 4 shown in Fig. 11 and the further enlarged region of Fig. 11 shown in Fig. 12, hills and valleys 14a (grooves) can be formed in surfaces of the heat-radiating plates 14 exposed from the outside surfaces of the outer case 4. This heat-radiating plate 14 configuration can increase the surface area on the outside to improve the heat-radiating characteristics via the hills and valleys while improving thermal coupling with the protruding pieces 32 via planar inside surfaces. As a result, battery holder 2 heat can be efficiently transferred to the heat-radiating plates and radiated outside the battery pack.

In the example shown in Fig. 5, the heat-radiating structure is implemented by insertion molding metal heat-radiating plates 14 into both the heat-radiating sub-case 11 and connecting sub-case 12 of the outer case. However, an implementation such as one with heat-radiating plates established only in the heat-radiating sub-case and not in the connecting sub-case is also possible.

In the preceding examples, heat-radiating plates are established in central regions of the upper and bottom surfaces of the battery pack. However, the present invention is not limited to that configuration, and heat-radiating plates can also be established in only the upper surface or only the bottom surface, or heat-radiating plates can additionally be established in side surfaces of the battery pack.

Output lines from a battery holder 2 housed in an outer case 4 are connected to output cables. Overall battery pack output connects to output terminals in the output connector established on the outer case 4. (In the case of multiple battery holders) each battery holder, which has many battery cells connected in series and/or parallel, is connected in parallel to increase battery pack capacity by a multiplicative factor.

The battery pack of the present invention is used to advantage in applications that include the battery pack for suppling driving power to an electric motor-bike, electric wheel-chair, electric tricycle, electric assist bicycle, electric go-cart or other vehicle.

## Claims

1. A battery pack comprising:
a plurality of battery cells (1);
a battery holder (2) that retains the plurality of battery cells (1); and
a plastic resin outer case (4) that houses the battery holder (2); wherein
metal heat-radiating plates (14) are insertion-molded into the outer case (4);
parts of the heat-radiating plates (14) are exposed from inside and outside surfaces of the outer case (4); and
the battery holder (2) is thermally coupled with the heat-radiating plates (14) exposed on the inside surfaces of the outer case (4),
**characterized in that**
exposed surfaces (15) of the heat-radiating plates (14) on inside surfaces of the outer case (4) are recessed by steps established on the inside surfaces of the outer case (4);
the battery holder (2) is provided with protruding pieces (32) opposite the exposed surfaces (15); and
the protruding pieces (32) insert into the recessed regions to mate with the exposed surfaces (15).

2. The battery pack as cited in claim 1 wherein insulating protection layer (16) covers the surfaces of heat-radiating plates (14) exposed from the inside surfaces of the outer case (4).

3. The battery pack as cited in either claim 1 or claim 2 wherein the heat-radiating plates (14) have hills and valleys (14a) formed in surfaces exposed from the outside surfaces of the outer case (4).

4. The battery pack as cited in any one of the claims 1 - 3 wherein surfaces of the heat-radiating plates (14) exposed from inside surfaces of the outer case (4) are formed as approximately (flat) planar surfaces.

5. The battery pack as cited in claim 1 wherein the protruding pieces (32) additionally serve as retaining pieces that prevent the battery cells (1) from falling out of the battery cell storage spaces (34) in the battery holder (2).

6. The battery pack as cited in any one of the claims 1 - 5 wherein outer case (4) surfaces where the heat-radiating plates (14) are exposed are the upper surface, the bottom surface, or both the upper and bottom surfaces.

## Patentansprüche

1. Batteriepack, umfassend:
eine Vielzahl von Batteriezellen (1);
einen Batteriehalter (2), der die Vielzahl von Batteriezellen (1) aufnimmt; und
ein Kunststoffharz-Außengehäuse (4), das den Batteriehalter (2) unterbringt; wobei
Metall-Wärmestrahlungsplatten (14) in das Außengehäuse (4) insert-eingeformt sind;
Teile der Wärmestrahlungsplatten (14) von Innenseiten- und Außenseiten-Oberflächen des Außengehäuses (4) her freiliegend sind; und
der Batteriehalter (2) thermisch mit den Wärmestrahlungsplatten (14) gekoppelt ist, die an den Innenseiten-Oberflächen des Außengehäuses (4) freiliegend sind,
**dadurch gekennzeichnet, dass**
freiliegende Oberflächen (15) der Wärmestrahlungsplatten (14) auf Innenseiten-Oberflächen des Außengehäuses (4) durch Stufen abgesetzt sind, die auf den Innenseiten-Oberflächen des Außengehäuses (4) gebildet sind;
der Batteriehalter mit vorragenden Stücken (32) gegenüber zu den freiliegenden Oberflächen (15) versehen ist; und
die vorragenden Stücke (32) in die abgesetzten Bereiche eingesetzt sind, um mit den freiliegenden Oberflächen (15) ineinander zu greifen.

2. Batteriepack gemäß Anspruch 1, wobei eine isolierende Schutzschicht (16) die Oberflächen der Wärmestrahlungsplatten (14) bedeckt, die von den Innenseiten-Oberflächen des Außengehäuses (4) her freiliegend sind.

3. Batteriepack gemäß Anspruch 1 oder Anspruch 2, wobei die Wärmestrahlungsplatten (14) Erhöhungen und Mulden (14a) aufweisen, die in Oberflächen gebildet sind, die von den Außenseiten-Oberflächen des Außengehäuses (4) her freiliegend sind.

4. Batteriepack gemäß einem der Ansprüche 1-3, wobei Oberflächen der Wärmestrahlungsplatten (14), die von Innenseiten-Oberflächen des Außengehäuses (4) her freiliegend sind, als annährungsweise (flache) planare Oberflächen gebildet sind.

5. Batteriepack gemäß Anspruch 1, wobei die vorragenden Stücke (32) zusätzlich als Haltestücke dienen, die verhindern, dass die Batteriezellen (1) aus Batteriezellspeicherräumen (34) in dem Batteriehalter (2) herausfallen.

6. Batteriepack gemäß einem der Ansprüche 1-5, wobei Oberflächen des Außengehäuses (4), wo die Wärmestrahlungsplatten (14) freiliegend sind, die obere Oberfläche, die untere Oberfläche oder beide der oberen und unteren Oberflächen sind.

## Revendications

1. Bloc-batterie comprenant:
une pluralité de cellules de batterie (1) ;
un porte-batterie (2) qui retient la pluralité de cellules de batterie (1) ; et
un boîtier externe (4) en résine plastique qui héberge le porte-batterie (2);
dans lequel
des plaques à rayonnement thermique (14) métalliques sont moulées par insertion dans le boîtier externe (4) ;
des parties des plaques à rayonnement thermique (14) sont exposées par rapport à des surfaces intérieure et extérieure du boîtier externe (4) ; et
le porte-batterie (2) est couplé thermiquement aux plaques à rayonnement thermique (14) exposées sur les surfaces intérieures du boîtier externe (4),
**caractérisé en ce que**
des surfaces exposées (15) des plaques à rayonnement thermique (14) sur des surfaces intérieures du boîtier externe (4) sont évidées par des gradins établis sur les surfaces intérieures du boîtier externe (4) ;
le porte-batterie (2) est pourvu de pièces en saillie (32) opposées aux surfaces exposées (15) ; et
les pièces en saillie (32) s'insèrent à l'intérieur des zones évidées pour s'apparier avec les surfaces exposées (15).

2. Bloc-batterie selon la revendication 1, dans lequel une couche de protection isolante (16) recouvre les surfaces des plaques à rayonnement thermique (14) exposées par rapport aux surfaces intérieures du boîtier externe (4).

3. Bloc-batterie selon la revendication 1 ou la revendication 2, dans lequel les plaques à rayonnement thermique (14) ont des bosses et des creux (14a) formés dans des surfaces exposées par rapport aux surfaces extérieures du boîtier externe (4).

4. Bloc-batterie selon l'une quelconque des revendications 1 à 3, dans lequel des surfaces des plaques à rayonnement thermique (14) exposées par rapport à des surfaces intérieures du boîtier externe (4) sont formées en tant que surfaces approximativement (plates) planes.

5. Bloc-batterie selon la revendication 1, dans lequel les pièces en saillie (32) servent additionnellement de pièces de retenue qui empêchent les cellules de batterie (1) de tomber hors des espaces de stockage de cellules de batterie (34) dans le porte-batterie (2).

6. Bloc-batterie selon l'une quelconque des revendications 1 à 5, dans lequel des surfaces de boîtier externe (4) où les plaques à rayonnement thermique (14) sont exposées sont la surface supérieure, la surface inférieure, ou les deux surfaces supérieure et inférieure.
